Europäisches Patentamt

European Patent Office

Office européen des brevets

(11) Publication number: **0 274 479 B1**

## EUROPEAN PATENT SPECIFICATION

(45) Date of publication of patent specification: **14.07.93**

(21) Application number: **87902239.0**

(22) Date of filing: **09.03.87**

(86) International application number:
**PCT/US87/00524**

(87) International publication number:
**WO 87/05232 (11.09.87 87/20)**

(51) Int. Cl.⁵: **B01J  38/72**, B01J 38/60,
B07B 13/02

(54) **Process for the separation and isolation of shaped catalyst-type particles by length.**

(30) Priority: **10.03.86 US 837690**

(43) Date of publication of application:
**20.07.88 Bulletin  88/29**

(45) Publication of the grant of the patent:
**14.07.93 Bulletin  93/28**

(84) Designated Contracting States:
**DE FR GB IT LU**

(56) References cited:
**US-A- 2 119 997        US-A- 2 494 556
US-A- 2 567 207        US-A- 2 669 353
US-A- 2 759 605        US-A- 3 702 238
US-A- 4 454 240**

**Carter-Day Company Bulletin No. UM-8, is-
sued April 1984, (Minneapolis, Minnesota)
"Carter-Day Uni-flow Cylinder Separator"**

**Oliver Manufacturing Company, Inc. issued
prior to March 1986 (RockyFord, Colorodo).
"Gravity Separator Operating Instruction
Manual"**

**Triple/S Dynamics, issued prior to March
1986, Dallas,Texas), "Dry Separations for the
Processing Industries". See the first printed
page under the heading, Dry Separation by
Fludization**

(73) Proprietor: **CRI INTERNATIONAL, INC.
1051 Sulgrave Avenue
Baltimorem, MD 21209(US)**

(72) Inventor: **WELCH, J., Gary
107 Fireside Circle
Baltimore, MD 21212(US)**
Inventor: **ELLINGHAM, Robert, E.
2314 Wonder View Road
Tomonium, MD 21093(US)**

(74) Representative: **Schulmeyer, Karl-Heinz, Dr.
Kieler Strasse 59a
W-2087 Hasloh (DE)**

Rank Xerox (UK) Business Services
(3. 10/3.6/3.3. 1)

**Description**

Field of the Invention

The invention relates to the separation and isolation of shaped catalyst-type particles by length. More particularly, this invention relates to length grading of generally cylindrically-shaped catalyst-type particles, and to the regeneration, rejuvenation, and manufacture of catalyst-type particles which have been subjected to length grading.

Background of the Invention

Catalysts used in the conversion and refining of hydrocarbons, as well as desorbents or adsorbents in the hydrocarbon separation or purification industry have a desired particle length requirement.

Fresh, or virgin catalysts, desorbents and adsorbents require segmentation into a particular particle length category in order to achieve optimum packing or reduce fixed bed pressure drop, or in the case of fluid beds achieve optimum pumping requirements.

In addition, catalysts used in the conversion and refining of hydrocarbons become contaminated with carbonaceous deposits, known as "coke", as well as metallic deposits, such as nickel, vanadium, iron or silica which may be present in the hydrocarbon feed as organometallic compounds or as tramp impurities. The spent catalyst becomes inactive and must be withdrawn from the catalyst reactor, and passed to a regenerator where coke is burned off to regenerate the catalyst, which is returned for reuse in the reactor. In addition to contamination, continued use of the catalyst results in catalyst attrition, i.e., the generally cylindrical catalyst particles become reduced in length to an undesirable degree. The presence of such shortened catalyst particles in a fixed bed reactor causes plugging of the bed and undesirable pressure buildup resulting in reduced flow and eventual shutdown of the bed. Historically, the catalyst industry has utilized classical screening techniques to remove "dust" or "fines", i.e., very small broken or deformed catalyst particles, from the catalyst mass.

However, use of a screen with a square aperture is limited by the diameter of the generally cylindrical catalyst particle or "pill". If the aperture of the screen is larger than the cross-sectional diameter of the pill, the screen cannot separate the catalyst pills on the basis of length. Screening can only be used to separate pills having a length-to-diameter ratio (L/D) less than one from pills having an L/D equal to or greater than one. Thus, a 12 mesh screen (square or slotted) having a 1.7 millimeter opening, which is either square or rectangular, will allow a 1/16 inch (1.6mm) diameter cylindrically shaped catalyst particle through the opening, whether the catalyst is 2 millimeters or 10 millimeters in length, as long as the catalyst enters the opening on end. Accordingly, in practice, the use of screening techniques is limited to removal of catalyst dust or fines in which the catalyst L/D is less than one.

Unfortunately, catalyst particles having an L/D greater than one can still be too short for usage in the reactor. Most frequently it is the particles with an L/D in the range of 1.0 to 2.0 that are undesirable and cause problems necessitating disposal of the entire catalyst batch containing such particles. Not only is such disposal costly and wasteful, in view of the great expense of catalysts, including those containing noble metals and the like, but, in addition, such disposal results in pollution and toxic waste disposal problems since many such catalysts contain toxic metals, such as cobalt, nickel, and vanadium.

The manufacturing process for shaped catalysts includes sizing and/or breaking procedures to produce a product of a desired particle length distribution. With the state of the art in screening and separation technology, it is frequently difficult if not impossible to obtain the desired particle length distribution, or if it is achieved, this commonly results in the rejection of desired particles along with those undesired because of the poor selectivity of the equipment or process. Major improvements can be obtained if particles can be selectively separated on a length basis if the length division point is such that the L/D ratio is greater than one.

Additionally, spent catalyst particle mixtures are "heterogeneous" in nature since the degree of feedstock-supplied metal contamination on each particle varies within the batch. Thus, a given batch of spent catalyst contains good catalyst particles and contaminated catalyst particles in varying degrees. However, since adequate methods are unavailable to separate the good particles from the more contaminated particles, the entire batch is often discarded.

In other cases a given lot of catalyst may consist of two or more similarly shaped and sized particles but different in composition and individual pellet density. This may commonly be, for example, mixtures of hydrotreating and hydrocracking catalysts or nickel-molybdenum and cobalt-molybdenum catalysts. Such mixtures may be spent catalyst removed from a processing reactor or fresh catalyst which may have been

2

inadvertently mixed during the manufacture or a handling process. These mixtures have diminished value and are commonly discarded.

The "Gravity Separator Operating Instruction Manual" issued by Oliver Manufacturing Company, Inc. describes a gravity separator for separating particles of a similar size that differ in weight. However, such an apparatus is not suitable to separate efficiently particles differing in specific gravities and also in size, e.g. in length. According to the Introduction of said manual the gravity separator should not be used as a sizing machine.

An apparatus for the selection of seeds or similar material is described in US-A-2 669 353. Such material, e.g. seed-grain, consists of particles which are irregular in shape, especially not generally cylindrical and do not necessarily have substantially the same cross-section diameter. The apparatus in said U.S.-patent does not present any feature which would enable the apparatus to select a group of particles of substantially the same diameter having a certain range of length from another group of particles which differ only in the range of length from that first group. The known apparatus can only achieve a size separation when the sizes are significantly different but not an effective length separation of a high degree of selectivity.

## Summary of the Invention

In accordance with one aspect of the present invention an admixture consisting essentially of shaped, generally cylindrical, free flowing, similar, catalyst-type particles all having substantially the same diameter, are separated into a first group of particles having a length to diameter ratio (L/D) greater than one and a length below a predetermined length, $L_1$, in the range of from about 0.8 to about 24 millimeters, and a second group of particles having an L/D greater than one and a length above the predetermined length $L_1$, by passing the catalyst admixture into a cylindrical drum having inwardly opening indentations in a cylindrical wall thereof, the indentations having a transverse diameter approximately equal to $L_1$; rotating the drum about a longitudinal axis thereof at a speed sufficient to entrap particles in the indentations and convey the particles of the first group upwardly to a height permitting the particles to fall into a fixed, upwardly opening trough, while retaining the particles of the second group in a bottom portion of the drum; conveying the particles in the trough out a first outlet; and conveying the particles in the bottom of the drum out a second outlet, separate from the first outlet. As will be hereinafter demonstrated, the length grading process of the present invention is capable of providing a particle size selectivity previously unobtainable with catalyst-type particles.

According to another aspect of the present invention, spent catalyst particles are deoiled, length graded and regenerated to remove carbonaceous deposits.

According to still another aspect of the present invention, spent catalyst particles are regenerated and then length graded.

According to further embodiment of the invention, spent catalyst is deoiled, extracted with acid to remove metal contaminants, regenerated to remove carbon contaminants, and then length graded.

According to another aspect of the present invention similar or dissimilar, fresh, virgin, shaped catalyst, adsorbents, or desorbents, are length graded to achieve homogeneous length fractions.

As will be hereinafter demonstrated, spent catalyst particles can be length graded within a very narrow particle distribution range with a precision unobtainable by conventional screen techniques.

## Brief Description of the Drawings

FIGS. 1 and 2 illustrate traditional screening techniques in accordance with the prior art;

FIG.3 is a schematic diagram showing the process of the present invention;

FIG.4 illustrates the length grading process of the present invention;

FIG. 5 illustrates a side elevational view of a cylindrical catalyst particle of the present invention;

FIG. 6 illustrates a partial perspective view of the length grading system of FIG. 4;

FIGS. 7 - 17 graphically illustrate the high degree of selectivity achievable with the length grading method of the invention.

## Description of the Preferred Embodiments

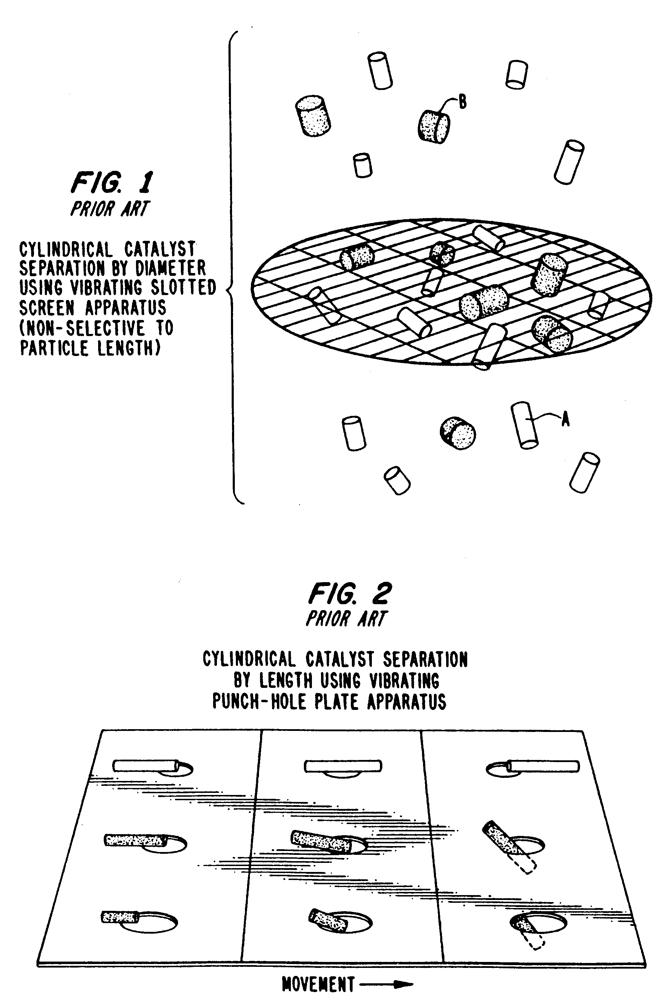

The limitations of a prior art slotted or rectangular screen are illustrated in FIG. 1 where the light pellets A have a diameter less than the narrow opening of the slotted screen. The dark pills B have a diameter greater than the narrow opening of the slotted screen. As can be seen from FIG. 1, any pill with a dimension less than the narrow opening can pass through. Thus, in this case, all light pills (with a diameter less than the narrow opening) or all dark pills with a length less than the narrow opening can pass through. FIG. 1 shows that the slotted screen separation is based on a particle's smallest dimension, whereas in length grading in accordance with the present invention, separation is based upon a particle's greatest dimension.

Another screening technique used to separate catalyst pills on a length basis employs vibrating "punched plates" as illustrated in FIG. 2 in accordance with the prior art. In this instance pills are axially aligned in the direction of movement and slide over the holes, and those pills with a length less than two times the hole diameter will "tip" over and pass through. The hole diameter must be greater than the pellet diameter so that this technique can only be used to separate at an L/D ratio greater than two. In practice this technique gives poor selectivity since the vibration of the apparatus required to move the pills across the plate causes many pills to bounce and simply fall through endwise, a problem similar to that experienced with square screens.

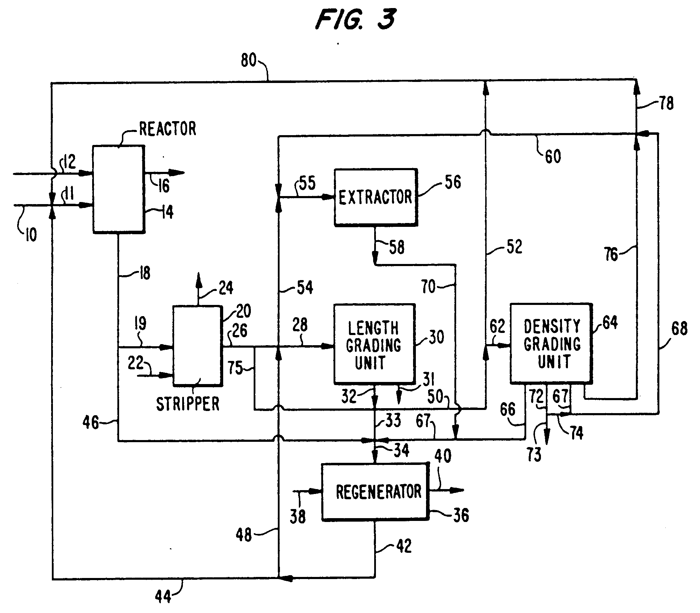

Referring now to FIG. 3 of the drawings which is in accordance with the present invention, fresh catalyst particles all having substantially the same diameter are supplied by means of lines 10 and 11 along with a hydrocarbon feedstock in line 12 to reactor 14 shown in block diagram form. The shaped catalyst-type particles of the present invention have a regular geometric shape, and are formed by extrusion or pelletizing. The catalyzed particles preferably have a generally cylindrical shape with a generally circular or polylobate cross section. The shaped catalyst-type particles of the present invention are to be distinguished from granular shaped particles which have an irregular shape. The preferred shaped catalyst particles treated by the process of the present invention have a cross-sectional diameter of from about 0.025 to about 1.0 inch (0.635 to about 25.4 mm), preferably from about 0.7 to about 4.0 mm. The diameter referred to in connection with the particles of the present invention is the largest cross-sectional diameter. The expression "substantially the same diameter" as used in the present application means that the diameter of a group of particles to be separated does not vary more than 10 percent.

The process of the present invention is suitable for treatment of any "catalyst-type particle". As used in the present application, the term "catalyst-type particle" means catalysts, catalyst supports, and sorbents. The term "similar" catalyst-type particles means substantially, all of said particles in the mixture have substantially the same chemical composition, e.g., cobalt molybdate on alumina. The term "dissimilar" catalyst-type particle mixture means the mixture contains a significant portion of particles of more than one type, e.g., a mixture comprising cobalt molybdate on alumina particles and alumina per se particles. The catalyst-type particles treated in accordance with the present invention may comprise any of the conventional catalysts used in conversion or refining of hydrocarbons, such as hydrotreating catalysts which commonly contain active metals from the group cobalt, molybdenum, nickel, tungsten and titanium supported on shaped alumina or silica alumina; hydrocracking catalysts which commonly contain active metals such as nickel, molybdenum, tungsten, and palladium supported on shaped silica-alumina or molecular sieves; reforming catalysts which commonly contain platinum, palladium or platinum in combination with another transition or rare earth metal supported on shaped alumina. Catalyst supports or sorbents, for example, silica, alumina, silica-alumina or molecular sieves without promoter metals may also be treated in accordance with this invention. For the purposes of illustration the following description will be directed to nickel-molybdate on a refractory metal oxide support.

The hydrocarbon feedstock from line 12 is subjected to hydrotreating, for example, in reactor 14 under conventional hydrotreating conditions, and the hydrocarbon products are withdrawn from reactor 14 by means of line 16. Reactor 14 can be a fixed bed, ebullated bed, slurry or fluidized bed type of reactor. Under continued usage the catalyst is subject to attrition, and carbonaceous deposits accumulate on the catalyst. Also, metallic deposits from the hydrocarbon feedstock, such as nickel, vanadium, iron and silica deposit on the catalyst particles. Such attrition and fouling reduces the effectiveness of the catalyst mass and if permitted to continue will result in the shutdown of reactor 14. Thus, spent catalyst particles are withdrawn from reactor 14 by means of lines 18 and 19 to stripper 20 where the spent catalyst particles are deoiled so as to render them free flowing. In stripper 20 the oily spent catalyst particles may be contacted with an inert gas, such as nitrogen, introduced by means of line 22, while being heated to a temperature of from about 100° to about 500°C, to volatize aqueous or oily residue on the spent catalyst particles. Volatized hydrocarbon or water is withdrawn from stripper 20 by means of line 24. Alternatively, the spent catalyst particles can be stripped in reactor 14 to remove hydrocarbons and thereby eliminate the need for stripper 20. In that event the free flowing particles are passed directly to length grading or regeneration hereinafter described (by means not shown).

Free flowing catalyst particles are withdrawn from stripper 20 by means of line 26 and passed by means of line 28 to length grading zone 30.

4

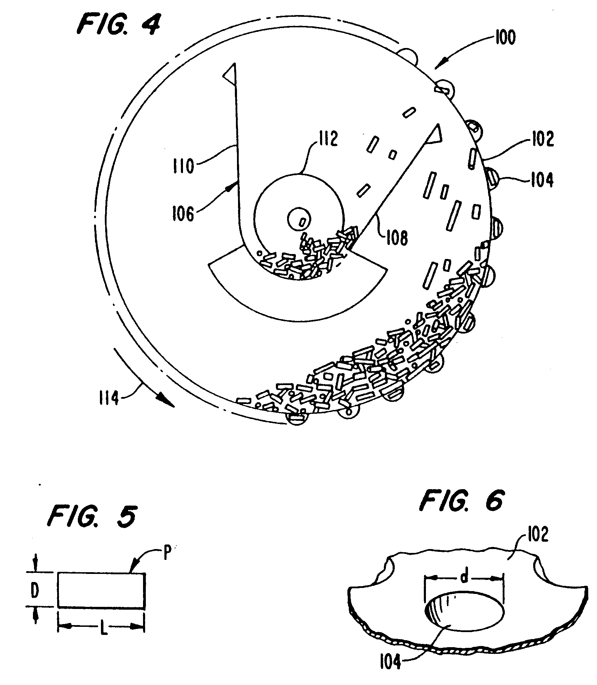

Referring now to FIG. 4, the length grading zone of the present invention is shown in more detail.

The separation zone comprises length separator apparatus 100 in which particles P (see FIG. 5) are to be separated according to their length, including the separation of two sets of particles, the first set comprising particles of length less than $L_1$ (the cut point) and a second set comprising particles of length greater than $L_1$, such that $L_1$ is greater than the transverse cross-sectional diameter D. The particles in both sets have substantially the same diameter and an L/D greater than one. Preferably, the particles in the first set have an L/D greater than one, but less than 2.0. Thus, the preferred particles to be isolated are the longer second set particles having a minimum length such that the L/D of such particles is between 1.0 and 2.0.

Preferably, selectivity of the process is at least 80-90 percent on a single pass through the length grading zone. Selectivity is defined as the percent removal of undesireable particles. In other words, in a given application of the process to a batch of particles, at least 80-90 percent of the particles with a length less than $L_1$ would be separated from the desired particles, which have a length greater than $L_1$, leaving no more than 10-20 percent of the original undersized particles in the desired fraction, e.g., the second set. The apparatus includes a cylindrical wall 102 having a plurality of inwardly opening, outwardly extending indentations 104. The cylindrical wall is rotatably mounted in a frame for rotation about its longitudinal axis. The indentations are hemispherical in shape and have a transverse diameter at the inner surface of cylindrical wall 102 equal to the minimal acceptable length, $L_1$, for the catalyst particles. $L_1$ is in the range of 0.8 to about 24 millimeters, preferably in the range of from about 0.8 to about 6 millimeters.

A U-shaped trough-like member 106 is fixedly mounted within cylindrical wall 102 such that the cylindrical wall rotates independently of the trough member and about the stationary trough member. Member 106 comprises legs 108 and 110 located at angularly separated positions when viewed in a transverse cross-sectional view of the cylindrical wall. Legs 110 and 108 are oriented in a generally upward direction, but may be rotated somewhat to optimize the separation. A spiral or screw conveyer 112 is rotatably mounted within trough member 106. However, the material in trough member 106 may be conveyed by vibrating motion also. This conveyer moves particles placed within the trough along the length of the trough and out a discharge end thereof.

In operation, the catalyst particles to be separated are fed into the interior of cylindrical wall 102 such that they rest on a lower portion thereof. The cylindrical wall is then rotated about its longitudinal axis in the direction indicated by arrow 114. As the cylindrical wall is rotated, the particles having a length L less than the opening diameter d of indentation 104 become lodged within hemispherical indentations 104. These particles are then lifted by a combination of the centrifugal forces applied to these particles, their entrapment within the hemispherical indentations and the rotation of cylindrical wall 102 to a point above the free end of leg 108 of trough member 106. At a point between legs 108 and 110, the position of the indentation no longer retains the particle against the force of gravity and the force of gravity overcomes the centrifugal forces applied by the rotation such that the particles fall from the indentations into trough member 106.

The particles which are too long, i.e., having a length L greater than the diameter d of indentations 104, cannot enter or become entrapped within the indentations. This will cause such particles to slip along the inside surface of cylindrical wall 102, and not be raised about the free end of leg 108. These longer particles remain outside of trough member 106.

In this manner, the set of relatively shorter particles is removed from the set or relatively longer particles placed in cylindrical wall 102, by the shorter set being deposited within trough member 106 and conveyed out of trough 106 by conveyer 112. The longer particles remain at the bottom of cylindrical wall 102. The relatively shorter particles having a length sufficiently small to fit within the indentations remain intermixed with the longer particles within the cylindrical wall until the shorter particles filter down and are entrapped within the indentations. The particles are subjected to rotation within the cylindrical wall for a time period sufficient to remove essentially all of the undesirable shorter particles having a length L less than the diameter d of the hemispherical indentations.

The separation of the particles is not limited by the ratio L/D of the particles. The desired separation or the minimum acceptable length for the particles can be set by choosing the diameter d of the hemispherical indentations 104.

After essentially all of the undesired, too short particles have been removed by being deposited within trough member 106, the remaining particles lying in the bottom of cylindrical wall 102 can be removed from the cylindrical wall for further processing or use. The desired longer particles can be recycled to unit 30 to provide an even greater degree of selectivity and further remove small quantities of undesired, shorter particles. Apparatus which can be adapted for use in the method of the present invention is shown in US-A-2 119 997.

Referring again to FIG. 3, length graded catalyst particles having the desired L/D greater than one are withdrawn from length grading zone 30 by means of line 32 and passed by means of lines 33 and 34 to regeneration zone 36 for removal of the carbonaceous deposits from the length graded catalyst particles. Regeneration zone 36 may be a conventional regenerator in which an oxygen-containing gas is supplied by means of line 38 under combustion conditions to oxidize the carbonaceous deposits to carbon dioxide which is withdrawn by line 40. Suitable oxidation temperatures include from about 200° to about 700°C, preferably from about 350° to about 500°C under atmospheric pressure.

The length graded, regenerated catalyst is withdrawn from regeneration zone 36 by means of line 42 and passed by means of line 44 to join fresh catalyst from line 10 for passage to reactor 14 by means of line 11.

It is desirable to remove volatile hydrocarbons in stripper 20 prior to regeneration in zone 36, since the oxidative regeneration process is exothermic, and the presence of the hydrocarbons during oxidation makes regeneration more difficult to control. Likewise, removal of the volatile hydrocarbons is desirable prior to length grading to avoid agglomeration of the catalyst particles which renders them more difficult to separate.

If the spent catalyst withdrawn from reactor 14 contains a high percentage (25-75 percent) of particles having an L/D greater than one with an undesirably short length, it is preferred to use length grading prior to regeneration to reduce the quantity of particles regenerated and thus reduce the cost of regeneration. However, if the quantity of undesirable particles is relatively small, then the spent catalyst from reactor 14 may be passed by means of lines 18, 46 and 34 directly to regeneration zone 36 or, alternatively if the catalyst is oil wet, the catalyst may be passed from reactor 14 to stripper 20 by lines 18 and 19 and then directly to regeneration 36 by lines 26, 75, 33 and 34, and thereafter passed by means of lines 42, 48 and 28 to length grading zone 30 for length grading. Thereafter, the regenerated, length graded particles may be returned by means of lines 32, 50, 52 and 80 to join line 11 for reintroduction to reactor 14.

If the spent catalyst particles withdrawn from reactor 14 are heavily laden with foreign or tramp metals, such as nickel and vanadium, picked up from the hydrocarbon feedstock, the spent catalyst from line 18 is passed by means of line 19 to stripping zone 20 to be de-oiled, as before, and then passed by means of lines 26, 54 and 55 to extraction zone 56 in which a portion of the undesired metals are selectively acid leached from the catalyst particles. The leaching operation consists of contacting the catalyst particles with an aqueous solution containing 2-20 weight percent sulfuric, sulfonic, nitric, acetic or citric acids at an elevated temperature, preferably 60°-250°F (16-121°C), for a period in excess of five minutes. The acid soaked catalyst pellets are typically rinsed with water before being passed on for further treatment. A process which can be adopted for use in the method of the present invention is described in US-A-4 454 240.

The nickel and vanadium reduced catalyst particles are withdrawn from extraction zone 56 by means of line 58 and passed by line 70, 67 and 34 to regeneration zone 36 for removal of carbonaceous deposits as previously described. The rejuvenated and regenerated catalyst is passed by lines 42, 48 and 28 to length grading zone 30, and then recycled by means of lines 32, 50, 52, 80 and 11 to reactor 14.

In accordance with a preferred embodiment of the present invention, spent catalyst from reactor 14, which is laden with heavy metals, such as nickel and vanadium, is passed by means of lines 18 and 19 to stripping zone 20, and the resulting free flowing deoiled catalyst particles are then passed by means of lines 26 and 28 to length grading zone 30. Free-flowing particles having the desired length are passed by means of lines 32, 50 and 62 to density grading zone 64 for density grading.

A preferred density grading system is described in a divisional European patent application.

In density grading zone 64 a light catalyst fraction is produced, which contains little or no heavy metal contamination, and this light fraction is passed by means of lines 66, 67 and 34 to regeneration zone 36 to remove carbonaceous deposits. The substantially carbon-free, light catalyst fraction can be recycled by means of lines 42, 44 and 11 to reactor 14. Alternatively, if the metals contaminates of the light fraction are too high to allow direct re-use through regeneration, they may be passed through the extraction zone 56 and regeneration zone 36 as described for the medium density fraction below.

A medium density catalyst fraction is withdrawn from density grading zone 64 by means of line 67 and passed by means of lines 68, 60 and 55 to extraction zone 56 for removal of heavy metals. Thereafter the rejuvenated catalyst fraction may be passed by means of lines 58, 70, 67 and 34 to regeneration zone 36 for removal of carbon. The catalyst particles are then returned to reactor 14 by means of lines 42, 44 and 11.

A heavily contaminated fraction is withdrawn from density grading zone 64 by means of line 72, and this fraction can be sent to disposal by means of line 73 or can be passed by means of lines 74, 68, 60 and 55 to acid extraction following the procedure used for the medium density fraction.

In accordance with another embodiment of the present invention, spent catalyst from reactor 14 is passed by means of lines 18 and 19 to stripper 20 to provide free flowing particles which are withdrawn by means of line 26 and passed by lines 75, 33 and 34 to regenerator 36. Regenerated particles are withdrawn by means of line 42 and passed by lines 48 and 28 to length grading in unit 30 for removal of the undesired shorter particles which are sent to disposal by means of line 31. The desired, longer particles are passed by means of lines 32, 50 and 62 to density grading in unit 64 to produce three fractions, namely, a light density catalyst fraction, which contains little or no heavy metal contamination, a medium density catalyst fraction, which is lightly contaminated with metal impurities, and a heavily metals-contaminated fraction. The light friction can be recycled directly to reactor 14 by means of lines 76, 78, 80 and 11 or subjected to extraction in extractor 56 by means of lines 76, 60 and 55. The medium density fraction can be passed by means of lines 67, 68, 60 and 55 to extractor 56, while the heavy fraction can be passed by means of line 72, 74, 68, 60 and 55 to extractor 56, or can be passed to disposal by means of line 73.

From the foregoing it can be seen that in complicating circumstances a combination of length grading and density grading is particularly advantageous and leads to reusable catalyst-type particles.

The following example demonstrates the high degree of length grading selectivity achievable by the length grading techniques of the present invention.

EXAMPLE

In order to demonstrate the high degree of selectivity available by the method of the present invention, two experiments were conducted with spent catalyst which had been stripped and a second sample which had been regenerated. The catalyst used in these examples has a diameter of 0.9 millimeter. The catalyst must be oil-free or regenerated before processing because it must be free flowing before subjected to length grading. Each catalyst sample was divided into three fractions on the basis of length using the apparatus depicted in Figure 4 of the drawings. The results are set forth in Table 1, below:

## Table 1

### Stripped Catalyst

| CATALYST | CPD ($kg/m^3$) | LOI (wt%) | C (wt%) | S (wt%) | Avg.Length (mm) | % Vol |
|---|---|---|---|---|---|---|
| Feed | 1199.8 | 9.6 | 22 | 9.1 | 2.3 | 100 |
| < 1.5mm | 1289.5 | 8.4 | 21 | 8.6 | 1.2 | 16 |
| 1.5-3.5mm | 1219.0 | 7.9 | 21 | 8.3 | 2.3 | 71 |
| > 3.5mm | 1079.6 | 11.8 | 22 | 7.3 | 3.6 | 13 |

### Regenerated Catalyst

| CATALYST | CPD ($kg/m^3$) | LOI (wt%) | C (wt%) | S (wt%) | Avg.Length (mm) | % Vol |
|---|---|---|---|---|---|---|
| Feed | 1119.7 | – | 5.9 | 5.8 | 1.6 | 100 |
| < 1.5mm | 1178.9 | – | 4.5 | 5.2 | 1.3 | 20 |
| 1.5-3.5mm | 1138.9 | – | 6.2 | 5.5 | 1.8 | 74 |
| > 3.5mm | 978.7 | – | 6.2 | 5.1 | 2.8 | 6 |

As seen in Table 1, the stripped catalyst feed material has a density of about 1199.8 kilogram/ cubic meter and an average length of 2.3 millimeters. The tests were conducted to first remove a fraction of catalyst with a length of 1.5 millimeters or shorter; the fraction with a length greater than 1.5 millimeters was then divided into a fraction in the range of 1.5-3.5 millimeters and a fraction with a length greater than 3.5 millimeters. As seen under the stripped catalyst section at the top of Table 1, three distinct fractions resulted; a short fraction having an average length of 1.2 millimeters, a medium sized fraction of 2.3 millimeters, and a third fraction with an average length of 3.6 millimeters. As seen in the last column of Table 1, the volume distribution achieved was 16% short, 71% medium length, and 13% long. This is a reflection of the amount of catalyst on a fresh basis that is divided into the three fractions.

Similar data was achieved for the regenerated catalyst. The regenerated catalyst has a somewhat shorter average length, (1.6 millimeters vs. 2.3 millimeters) for the feed materials. However, it is seen that

7

there is a distinct difference in the three fractions. The short having an average length of 1.3 millimeters, the medium material has an average length of 1.8 millimeters, and finally, the long material has an average length of 2.8 millimeters. The volume breakdown of the distribution for the three fractions shows that the regenerated catalyst can be cut into three significantly different fractions on the basis of average length.

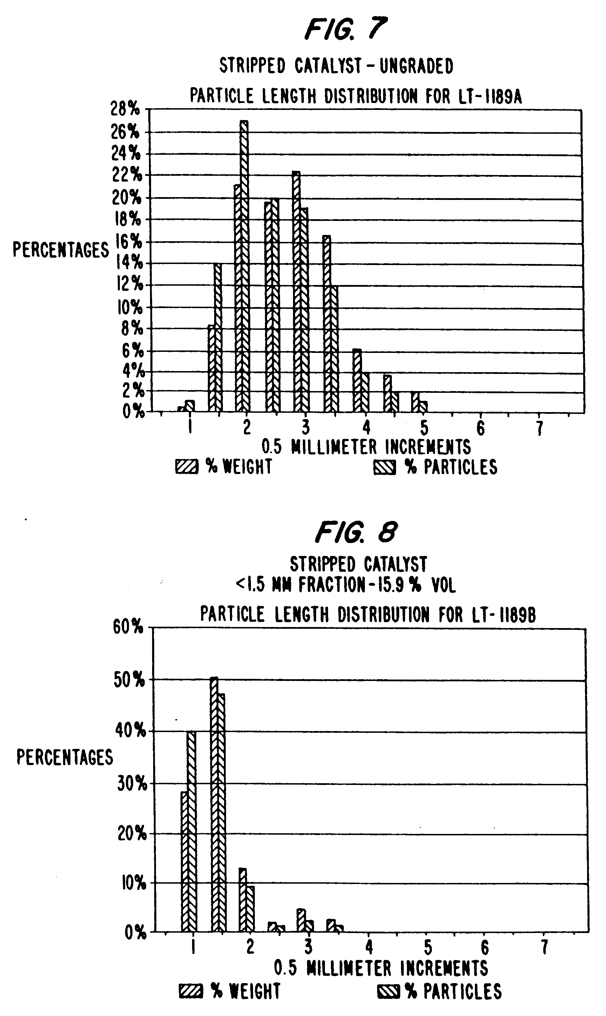

Figure 7 is a graphical representation of the test results in the form of a bar graph. There are two bars at each length increment; one is for weight percent of the particles, and the second is number percent showing a distribution of the ungraded stripped catalyst. As shown there is some material below 1.5 millimeters and a large amount of material above 3.5 millimeters. Using the length grading method of the present invention selective cuts were made at 1.5 millimeters and 3.5 millimeters. The desired short fraction should have 1.5 millimeters and shorter material only, and the long fraction 3.5 millimeters and longer materials only, with a center cut only ranging from 1.5 millimeters to 3.5 millimeters.

Figure 8 shows an attempt to isolate short material in a stripped catalyst, i.e., a less than 1.5 millimeters fraction and 15.9% on a volume basis was isolated from the total starting material. As seen in Figure 8, the preponderance of particles are in the 1.5 millimeters to shorter particle size range. There is approximately 10-15% of materials longer than 1.5 millimeters, and compared to the starting material, this represents a very dramatic improvement. The small materials have been isolated and nearly all of the materials longer than 1.5 millimeters have been eliminated or rejected.

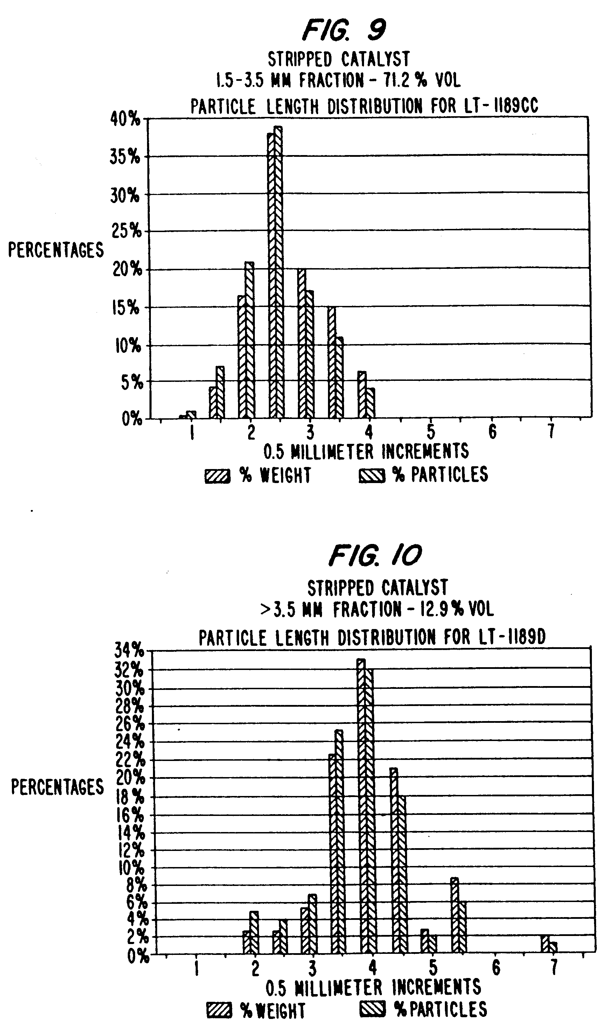

Referring to Figure 9, it is seen that 71.2% by volume of the middle fraction, 1.5-3.5 millimeters, has been isolated with about 5% of the material that lies outside the range of 1.5-3.5 millimeters. Thus, a very narrow distribution of particles falling 95% + within the designated particle length range was achieved.

Referring to Figure 10, it is seen that 12.9% has gone into a long fraction. As seen in Figure 10, there is probably 10-12% of material shorter than 3.5 millimeters, but the tail or long materials have been isolated from the initial starting material.

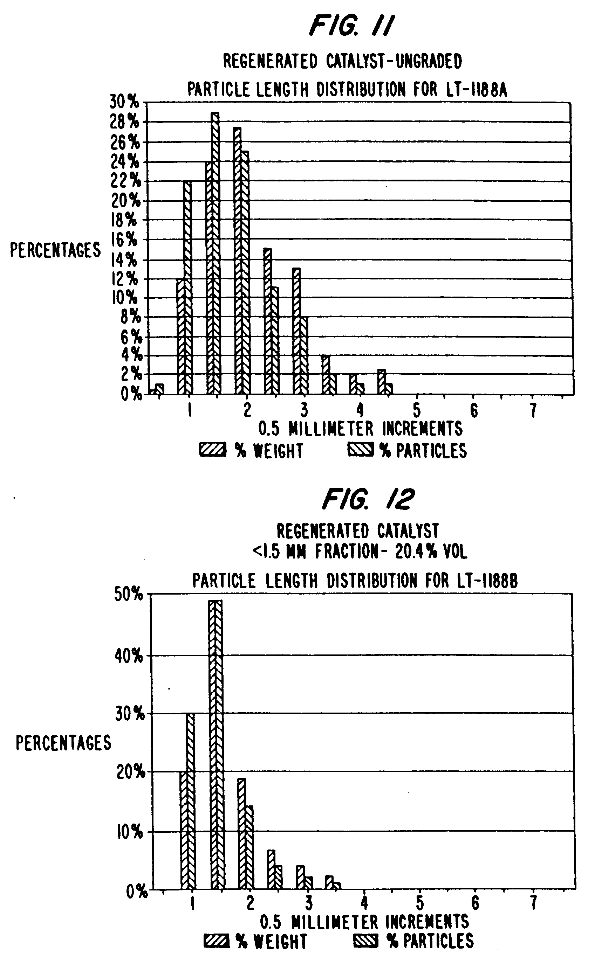

Referring to Figure 11, the distribution of regenerated catalysts that were to be length graded is shown. By comparison to the stripped material, it is quite a bit shorter, the distribution is biased much more to the short end than was the stripped material. However, the present length grading process is unaffected to a large extent by the distribution.

Figure 12 shows an attempt to remove just the small materials, i.e., 1.5 millimeters and shorter. There is more of a tail than there was with the stripped catalyst because of the biased distribution of the starting material. However, as seen in Figure 12 approximately 80% of the resulting particles were in the particle length range desired which shows a very high degree of selectivity that could never be approached by conventional screen techniques.

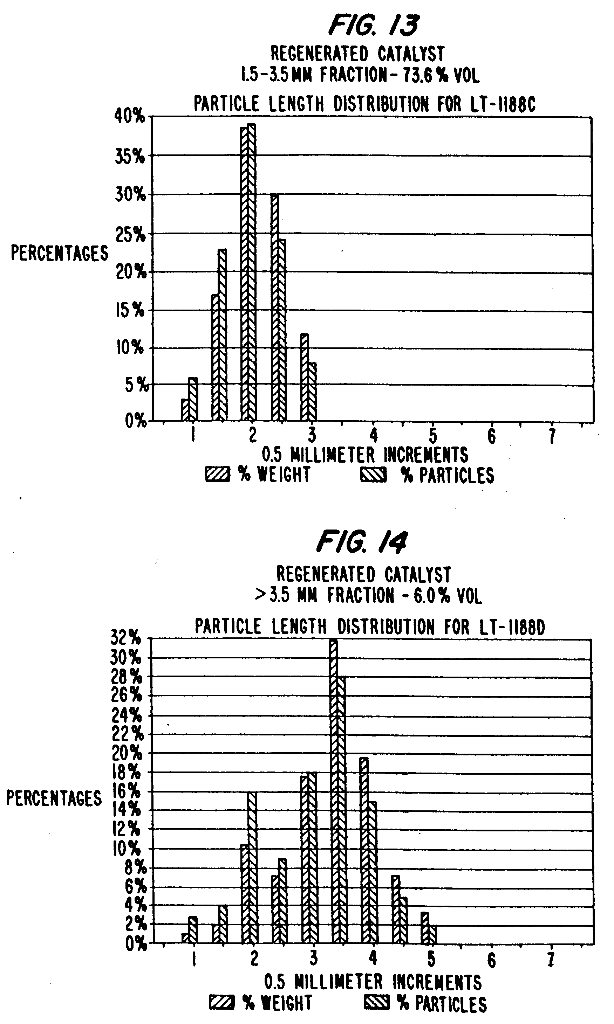

Figure 13 shows the middle fraction and there is approximately 5%, or about 3% on a weight basis, of materials shorter than 1.5 millimeters and literally nothing longer than the 3.5 millimeters target range.

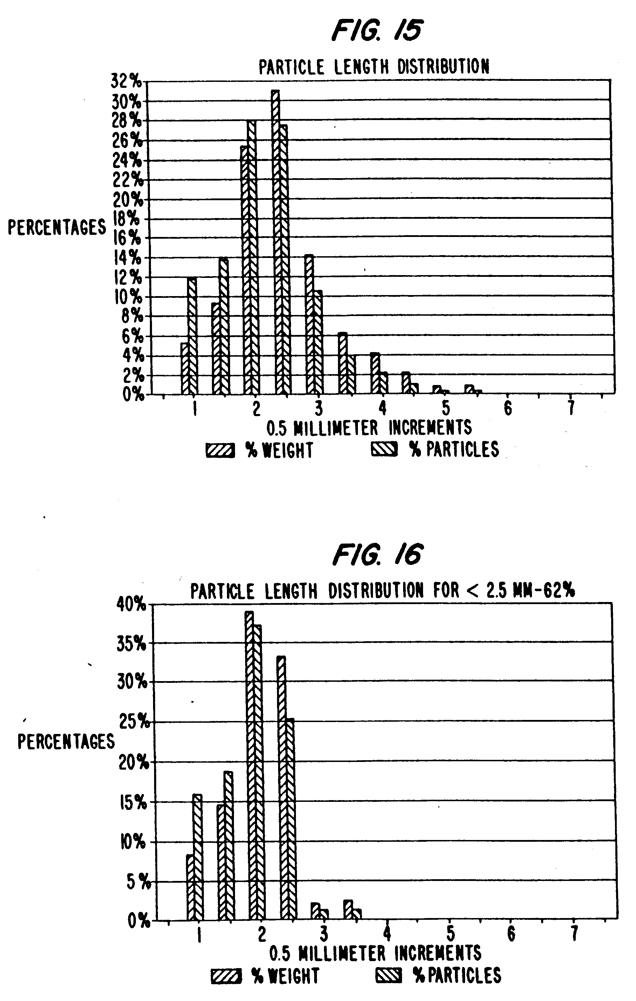

Figure 14 shows the results of a very difficult separation because only about 7% of the material was being separated. In this case a significant amount of materials shorter than 3.5 millimeters results, but considering the starting distribution, the present process was extremely selective in pulling out just the longer materials with the minimum amount of shorter materials coming with it. In this connection, as seen in Figure 11, there is only about 4-6% of material in the 3.5 millimeters and above range and that would be an exceedingly difficult cut to isolate considering the small amount of material. But comparing this to Figure 14 the particle length distribution has been dramatically shifted and the average length has shifted from 1.55 to 2.82.

It is important that the cut points used in these examples represent L/D ratios greater than 1.0. In the first cut the L/D ratio is 1.5/0.9 = 1.67; and the second cut has an L/D ratio of 3.5/0.9 = 3.89. Further, it should be understood that a high degree of separation and selectivity has been obtained in a single pass through the length grading equipment. Passing each of the various concentrated fractions (i.e., less than 1.5 millimeters, 1.5-3.5 millimeters, and greater than 3.5 millimeters) back through the length grading apparatus significantly improves the selectivity by further eliminating particles outside the desired particle length range. Such recycle or series operation is used in applications where extremely high selectivity is required.

Figure 15 shows the distribution for a stripped material used in an experiment to make a cut at 2.5 millimeters. As seen from Figure 15, at about the 2.5 millimeters point, approximately 2/3 of the material should be 2.5 millimeters or shorter, and approximately 1/3 would be 2.5 millimeters or longer, and that is the split which was attempted.

As seen in Figure 16, the length distribution of the material shorter than 2.5 millimeters is depicted and 62% on a volume basis has been isolated. Surprisingly, less than 5%, i.e., 2-3% of the material is outside the target range of less than 2.5 millimeters.

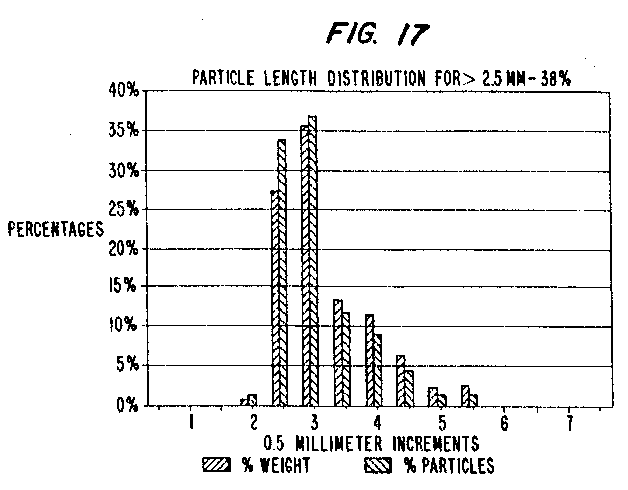

Figure 17 shows the distribution for particles above 2.5 millimeters and reveals almost no particles shorter than the target range of less than 2.5 millimeters.

## Claims

1. A process for treating a mixture of free flowing catalyst-type particles (catalysts, catalyst supports and sorbents) consisting essentially of a regular geometric shape, particularly of a generally cylindrical shape, having substantially the same diameter, varying length and an L/D greater than one, a first group of them having a length below a predetermined length, $L_1$, said length, $L_1$, being in the range of from 0.8 to about 24 mm, and a second group of particles having a length greater than $L_1$, comprising the steps of:

   a) feeding said mixture of catalyst-type particles into a length grading zone comprising a rotating cylindrical drum having inwardly opening indentations in a cylindrical wall thereof, the indentations having a transverse diameter $L_1$;

   b) rotating the drum about a longitudinal axis thereof at a speed sufficient to entrap in the indentations and convey the particles having a length below $L_1$ upwardly to a height permitting the particles to fall into a fixed, upwardly opening trough, while the particles having a length above $L_1$ remain outside of the trough in a bottom portion of said drum;

   c) conveying said particles in the trough out a first outlet; and

   d) conveying said particles in the bottom portion of the drum out a second outlet, separate from said first outlet, and recovering said particles having a length above $L_1$ for further processing or use.

2. A process as defined in claim 1 wherein said second group of particles comprise particles having an L/D between 1.0 and 2.0.

3. A process as defined in claim 1 wherein said particles have been rendered free flowing by treatment with an inert stripping gas while heating.

4. A process as defined in claim 1 wherein said particles contain active catalytic metals from the group of cobalt, nickel, molybdenum, titanium or tungsten on a refractory metal oxide support.

5. A process as defined in claim 1 wherein said particles are pelletized or extruded alumina, silica-alumina, silica, molecular sieves or combinations thereof.

6. A process as defined in claim 1 where $L_1$ is in the range of from 0.8 to about 6 mm.

7. A process as defined in any one of claims 1 to 6 wherein said particles consist of a spent catalyst-type particle mixture which prior to passing to the length grading zone is passed to a stripping zone to remove volatizable hydrocarbons from said catalyst-type particles and to a regeneration zone to remove carbon deposits from the surface of said catalyst particles and to provide regenerated catalyst-type particles.

8. A process as defined in claim 7 wherein said stripped catalyst-type particles are contacted with a leaching acid to remove heavy metals.

9. A process as defined in claim 7 wherein said regenerated catalyst-type particles are contacted with a leaching acid to remove heavy metals.

10. A process as defined in any one of claims 1 to 6, wherein said particles consist of a spent catalyst-type particle mixture which prior to passing to the length grading zone is passed to a regeneration zone to remove carbon deposits from the surface of the particles.

## Patentansprüche

1. Verfahren zur Sortierung und Isolierung von Katalysator-Formteilchen nach ihrer Länge durch Behandlung einer Mischung von frei fließenden Katalysator-Formteilchen (Katalysatoren, Katalysator-Träger, Sorbentien) mit einer im wesentlichen regulär-geometrischen Form, insbesondere mit einer zylindrischen Form, und mit im wesentlichen dem gleichen Durchmesser, verschiedener Länge und einem L/D-Wert größer als 1, wobei eine erste Gruppe von Teilchen eine Länge $L_1$ im Bereich von 0,8 bis etwa 24 mm besitzt, die unterhalb der vorbestimmten Länge liegt, während eine zweite Gruppe von Teilchen eine Länge größer als $L_1$ aufweist, mit folgenden Verfahrensschritten:

9

a) Einführen der Mischung von Katalysator-Formteilchen in eine Zone zur Sortierung der Teilchen nach ihrer Länge, die eine rotierende Zylindertrommel mit nach innen offenen Vertiefungen in der zylindrischen Wand aufweist, wobei diese Vertiefungen einen transversalen Durchmesser $L_1$ aufweisen;

b) Rotieren der Trommel um ihre Längsachse mit einer Geschwindigkeit, die ausreicht, um die Teilchen mit der Länge kleiner als $L_1$ in die Vertiefungen einzufangen und nach oben bis zu einer Höhe zu befördern, die es den Teilchen ermöglicht, in einen ortsfesten, nach oben offenen Trog zu fallen, während die Teilchen mit einer Länge größer als $L_1$ außerhalb des Troges auf dem Bodenteil der Trommel verbleiben;

c) Herausbefördern der in dem Trog befindlichen Teilchen aus einem ersten Auslaß; und

d) Herausbefördern der in dem Bodenteil der Trommel befindlichen Teilchen aus einem zweiten Auslaß, der von dem ersten Auslaß getrennt ist, und Wiedergewinnen der Teilchen mit einer Länge größer als $L_1$ für die weitere Verarbeitung oder Verwendung.

2. Verfahren nach Anspruch 1, dadurch gekennzeichnet, daß die Teilchen der zweiten Gruppe Teilchen mit einem L/D-Wert zwischen 1,0 und 2,0 umfassen.

3. Verfahren nach Anspruch 1, dadurch gekennzeichnet, daß die Teilchen durch Behandlung mit einem inerten Strippgas unter Erwärmen frei fließend gemacht werden.

4. Verfahren nach Anspruch 1, dadurch gekennzeichnet, daß die Teilchen aktive, katalytisch wirkende Metalle aus der Gruppe Kobalt, Nickel, Molybdän, Titan oder Wolfram auf einem hitzebeständigen Metalloxidträger enthalten.

5. Verfahren nach Anspruch 1, dadurch gekennzeichnet, daß die Teilchen aus pelletisierten oder extrudierten Aluminiumoxiden, Siliciumdioxid-Aluminiumoxiden, Kieselerden, Molekularsieben oder deren Kombinationen bestehen.

6. Verfahren nach Anspruch 1, dadurch gekennzeichnet, daß $L_1$ im Bereich von 0,8 bis etwa 6 mm liegt.

7. Verfahren nach einem der Ansprüche 1 bis 6, dadurch gekennzeichnet, daß die Teilchen aus einer Mischung aus verbrauchten Katalysator-Formteilchen bestehen, die vor dem Passieren der Längen-Sortierungszone zur Entfernung flüchtiger Kohlenwasserstoffe eine Strippzone und dann zur Entfernung von Kohlenstoffablagerungen von der Oberfläche der Katalysator-Formteilchen und zur Bereitstellung regenerierter Katalysator-Formteilchen eine Regenerierungszone durchläuft.

8. Verfahren nach Anspruch 7, dadurch gekennzeichnet, daß die gestrippten Katalysator-Formteilchen zur Entfernung von Schwermetallen mit einer die Schwermetalle auslaugenden Säure in Berührung gebracht werden.

9. Verfahren nach Anspruch 7, dadurch gekennzeichnet, daß die regenerierten Katalysator-Formteilchen zur Entfernung von Schwermetallen mit einer die Schwermetalle auslaugenden Säure in Berührung gebracht werden.

10. Verfahren nach einem der Ansprüche 1 bis 6, dadurch gekennzeichnet, daß die Teilchen aus einer Mischung aus verbrauchten Katalysator-Formteilchen bestehen, die vor dem Passieren der Längen-Sortierungszone eine Regenerierungszone zur Entfernung von Kohlenstoffablagerungen von der Oberfläche der Teilchen durchläuft.

**Revendications**

1. Un procédé de traitement d'un mélange de particules à écoulement libre et du type catalyseur (catalyseurs, supports de catalyseur et sorbants), présentant sensiblement une forme géométrique régulière, en particulier une forme générale cylindrique, dont le diamètre est sensiblement le même, dont la longueur varie et le rapport L/D est supérieur à l'unité, un premier groupe d'entre elles ayant une longueur inférieure à une longueur prédéterminée $L_1$, ladite longueur étant dans une plage comprise entre 0,8 et environ 24 mm, et un second groupe de particules ayant une longueur supérieure à $L_1$, le procédé comprenant les étapes consistant à:

a) alimenter ledit mélange de particules du type catalyseur sur une zone de classement selon la longueur, comprenant un tambour cylindrique rotatif présentant des entailles s'ouvrant vers l'intérieur dans sa paroi cylindrique, les entailles présentant un diamètre transversal $L_1$ ;

b) faire tourner le tambour autour de son axe longitudinal à une vitesse suffisante pour capter dans les entailles et transporter les particules dont la longueur est inférieure à $L_1$ vers le haut jusqu'à une hauteur leur permettant de tomber dans une cuve fixe, ouverte vers le haut, tandis que les autres particules dont la longueur est supérieure à $L_1$ restent en dehors de la cuve dans une partie de fond dudit tambour;

c) retirer lesdites particules dans la cuve par une première sortie; et

d) transporter lesdites particules dans la partie de fond du tambour par une seconde sortie séparée de ladite première sortie et récupérer lesdites particules de longueur supérieure à $L_1$ pour un traitement ou un usage ultérieur.

2. Un procédé tel que défini dans la revendication 1, dans lequel ledit second groupe de particules comprend des particules dont le rapport L/D est compris entre 1 et 2.

3. Un procédé tel que défini dans la revendication 1, dans lequel lesdites particules ont été constituées en un flux à écoulement libre en les traitant, au cours de leur chauffage, par un gaz inerte de lavage.

4. Un procédé tel que défini dans la revendication 1, dans lequel lesdites particules contiennent des métaux catalytiques actifs du groupe du cobalt, du nickel, du molybdène, du titane ou du tunsgtène sur un support réfractaire d'oxyde métallique.

5. Un procédé tel que défini dans la revendication 1, dans lequel lesdites particules sont de l'alumine nodulisée ou extrudée, de la silice-alumine, de la silice, des tamis moléculaires ou des combinaisons de ces éléments.

6. Un procédé tel que défini dans la revendication 1, dans lequel $L_1$ est dans une plage comprise entre 0,8 et environ 6 mm.

7. Un procédé tel que défini dans l'une quelconque des revendications 1 à 6, dans lequel lesdites particules consistent en un mélange de particules de type catalyseur usé, mélange qui, avant de passer dans la zone de classement selon la longueur, traverse une zone de lavage pour en extraire les hydrocarbures volatils et une zone de régénération pour extraire les dépôts de carbone de la surface desdites particules de catalyseur et pour obtenir des particules de type catalyseur régénérées.

8. Un procédé tel que défini dans la revendication 7, dans lequel lesdites particules lavées de type catalyseur sont mises en contact avec un acide de lixiviation pour extraire les métaux lourds.

9. Un procédé tel que défini dans la revendication 7, dans lequel lesdites particules régénérées de type catalyseur sont mises en contact avec un acide de lixiviation pour extraire les métaux lourds.

10. Un procédé tel que défini dans l'une quelconque des revendications 1 à 6, dans lequel lesdites particules consistent en un mélange de particules de type catalyseur usé, qui passe dans une zone de régénération pour extraire les dépôts de carbone de la surface des particules avant de traverser la zone de classement selon la longueur.

**FIG. 1**
*PRIOR ART*

CYLINDRICAL CATALYST
SEPARATION BY DIAMETER
USING VIBRATING SLOTTED
SCREEN APPARATUS
(NON-SELECTIVE TO
PARTICLE LENGTH)

**FIG. 2**
*PRIOR ART*

CYLINDRICAL CATALYST SEPARATION
BY LENGTH USING VIBRATING
PUNCH-HOLE PLATE APPARATUS

MOVEMENT ⟶

FIG. 3

EP 0 274 479 B1

# FIG. 4

# FIG. 5

# FIG. 6

# FIG. 7

STRIPPED CATALYST – UNGRADED

PARTICLE LENGTH DISTRIBUTION FOR LT-1189A

# FIG. 8

STRIPPED CATALYST
<1.5 MM FRACTION-15.9 % VOL

PARTICLE LENGTH DISTRIBUTION FOR LT-1189B

## FIG. 9

STRIPPED CATALYST
1.5-3.5 MM FRACTION - 71.2 % VOL
PARTICLE LENGTH DISTRIBUTION FOR LT-1189CC

0.5 MILLIMETER INCREMENTS

▨ % WEIGHT     ▩ % PARTICLES

## FIG. 10

STRIPPED CATALYST
>3.5 MM FRACTION - 12.9 % VOL
PARTICLE LENGTH DISTRIBUTION FOR LT-1189D

0.5 MILLIMETER INCREMENTS

▨ % WEIGHT     ▩ % PARTICLES

16

## FIG. 11

REGENERATED CATALYST-UNGRADED
PARTICLE LENGTH DISTRIBUTION FOR LT-1188A

## FIG. 12

REGENERATED CATALYST
<1.5 MM FRACTION- 20.4% VOL

PARTICLE LENGTH DISTRIBUTION FOR LT-1188B

## FIG. 13

### REGENERATED CATALYST
### 1.5-3.5 MM FRACTION- 73.6 % VOL

PARTICLE LENGTH DISTRIBUTION FOR LT-1188C

PERCENTAGES

0.5 MILLIMETER INCREMENTS

% WEIGHT          % PARTICLES

## FIG. 14

### REGENERATED CATALYST
### >3.5 MM FRACTION - 6.0% VOL

PARTICLE LENGTH DISTRIBUTION FOR LT-1188D

PERCENTAGES

0.5 MILLIMETER INCREMENTS

% WEIGHT          % PARTICLES

## *FIG. 15*

### PARTICLE LENGTH DISTRIBUTION

PERCENTAGES

0.5 MILLIMETER INCREMENTS

ⅢⅢ % WEIGHT       ⬚⬚ % PARTICLES

## *FIG. 16*

### PARTICLE LENGTH DISTRIBUTION FOR < 2.5 MM-62%

PERCENTAGES

0.5 MILLIMETER INCREMENTS

ⅢⅢ % WEIGHT       ⬚⬚ % PARTICLES

FIG. 17

PARTICLE LENGTH DISTRIBUTION FOR > 2.5 MM - 38%

PERCENTAGES

0.5 MILLIMETER INCREMENTS

% WEIGHT    % PARTICLES